# EUROPÄISCHE PATENTSCHRIFT

(11) **EP 3 872 461 B1**
(45) Veröffentlichungstag und Bekanntmachung des Hinweises auf die Patenterteilung: **13.09.2023**
(21) Anmeldenummer: 20315024.8
(22) Anmeldetag: 27.02.2020
(51) Int. Cl.: G01G 19/08, B60W 40/13

(54) **VERFAHREN ZUR ERMITTLUNG DES BELADUNGSZUSTANDES EINES TRANSPORTERS UND TRANSPORTMANAGEMENTSYSTEM**
METHOD FOR DETERMINING THE LOADING STATE OF A TRANSPORTER AND TRANSPORT MANAGEMENT SYSTEM
PROCÉDÉ DE DÉTERMINATION DE L'ÉTAT DE CHARGEMENT D'UN TRANSPORTEUR ET SYSTÈME DE GESTION DU TRANSPORT

(43) Veröffentlichungstag der Anmeldung: 01.09.2021
(73) Patentinhaber: Continental Automotive Technologies GmbH, 30165 Hannover (DE)
(72) Erfinder: Segesser, Carsten, 60486 Frankfurt (DE); Rollet, Benjamin, 31170 Tournefeuille (FR)
(74) Vertreter: Continental Corporation

(56) Entgegenhaltungen:
- DE-A1- 10 334 708

## Beschreibung

Verfahren zur Ermittlung des Beladungszustandes eines Transporters und Transportmanagementsystem

Die Erfindung betrifft ein Verfahren zur Ermittlung des Beladungszustandes eines mit Gütern beladenen Transporters, wobei der Transporter einen von einer Ladefläche, einer Vorderwand, einer Rückwand, mehreren Seitenwänden sowie einem Dach umgrenzten Laderaum zur Aufnahme der Güter aufweist, wobei zumindest die Vorderwand und/oder die Rückwand und/oder eine Seitenwand eine Türe zum Beladen der Ladefläche mit Gütern aufweist sowie ein Transportmanagementsystem.

In modernen Transportfahrzeugen werden zunehmend Transportmanagementsysteme zur Planung und Steuerung von Transportaufträgen und Fahrzeugeinsätzen sowie zur Tourenplanung, zur auftragsorientierten Navigation und zur Zielführung von einzelnen Transporten eingesetzt. Ziel ist es, Leerfahrten durch einen unbekannten Beladungszustand so weit wie möglich zu vermeiden.

Durch eine Sensorik in den Laderäumen würde sich der Beladungszustand erkennen lassen. Diese Sensorik würde jedoch die Transportkosten erhöhen, so dass oftmals auf deren Einsatz verzichtet wird. Auch die zusätzliche Wartung der Sensoren und/oder regelmäßige Austausch würde die Transportkosten erhöhen. Durch den Verzicht auf den Verbau von Sensorik im Laderaum sind die Transportmanager oft nicht in der Lage, zusätzliche Ladungen auf den Routen, die ihre Transporter abfahren, anzunehmen.

Das Dokument DE 103 34 708 A1 offenbart ein Nutzfahrzeug mit einer Ladefläche und mit einem Navigationssystem, wobei das Nutzfahrzeug eine Sensorik aufweist, die eine Ladekapazität erfasst. Ein Telematiksystem ist dafür vorgesehen, Daten zumindest bezüglich der Ladekapazität und/oder eines Standortes des Nutzfahrzeugs zu verarbeiten und/oder an eine Zentralstelle zu übermitteln.

Die AT 521202 A1 offenbart ein System zur Routenplanung für ein Transportfahrzeug mit einem im Transportfahrzeug integrierten ersten Sensor zum Vermessen eines freien Laderaums des Transportfahrzeugs, einem zweiten Sensor zur Erfassung einer Fahrzeugposition des Transportfahrzeugs und einem mit dem zweiten Sensor verbundenen Navigationssystem zum Errechnen einer abzufahrenden Route für das Transportfahrzeug auf Basis der Fahrzeugposition, wobei eine Datenbank vorgesehen ist, welche Daten in Bezug auf Position und Art von zu transportierender Ladung enthält, ein Prozessor vorgesehen ist, welcher zum Datenaustausch mit dem ersten Sensor, dem Navigationssystem und der Datenbank eingerichtet ist, wobei zumindest eine drahtlose Datenfernübertragungsverbindung beim Datenaustausch mit dem ersten Sensor, dem Navigationssystem oder der Datenbank zum Einsatz kommt, und wobei der Prozessor dazu eingerichtet ist, während der Fahrt aus von der Datenbank abgefragten Daten eine zusätzliche Ladung auszuwählen, wobei die zusätzliche Ladung unter Berücksichtigung des durch den ersten Sensor erfassten freien Laderaums und eines verbleibenden Rests der abzufahrenden Route hinsichtlich einer Ladungsposition der zusätzlichen Ladung und einer Ladungsart der zusätzlichen Ladung geeignet ist, und der Prozessor dazu eingerichtet ist, mittels eines Eingriffs in das Navigationssystem den verbleibenden Rest der abzufahrenden Route so zu ändern, dass das Transportfahrzeug die Ladungsposition der geeigneten zusätzlichen Ladung anfährt.

Es ist daher eine Aufgabe der Erfindung ein kostengünstiges und aufwandsarmes Verfahren anzugeben, welche den Fahrer als auch das Transportunternehmen dabei unterstützt, den Laderaum des Transporters individuell und optimal auszunutzen. Auf teure, im Laderaum zu verbauende Sensorik soll verzichtet werden. Ferner ist die Angabe eines verbesserten Transportmanagementsystems eine weitere Aufgabe der Erfindung.

Diese Aufgabe wird durch ein Verfahren mit den Merkmalen des Anspruchs 1 sowie ein Transportmanagementsystem mit den Merkmalen des Anspruchs 8 gelöst.

In den Unteransprüchen sind weitere vorteilhafte Maßnahmen aufgelistet, die miteinander kombiniert werden können, um weitere Vorteile zu erzielen.

Die Aufgabe wird gelöst durch ein Verfahren zur Ermittlung des Beladungszustandes eines mit Gütern beladenen Transporters, wobei der Transporter einen von einer Ladefläche, einer Vorderwand, einer Rückwand, mehreren Seitenwänden sowie einem Dach umgrenzten Laderaum zur Aufnahme der Güter aufweist, wobei zumindest die Vorderwand und/oder die Rückwand und/oder eine Seitenwand zumindest teilweise eine Türe zum Beladen der Ladefläche mit Gütern aufweist,
umfassend der Schritte:
- Ermitteln des Gewichtes der geladenen Güter,
- Ermitteln des freien Ladevolumens in dem Laderaum anhand der Auswertung zumindest eines manuell aufgenommenen Bildes des mit Gütern beladenen Laderaums.

Das Gewicht kann beispielsweise durch ein Reifendruckkontrollsystem (TPMS), durch Dehnungsmessstreifen, oder durch eine Kontrolle der Luftfedern etc. festgestellt werden oder andere Möglichkeiten (e.g. Schätzungen der OEM basierend auf Beschleunigungs- und Bremsverhalten der LKW und Vergleich zu LKW mit bekanntem Gewicht).

Das manuell aufgenommene Bild kann beispielsweise durch den Fahrer mittels einer mobilen Einheit aufgenommen werden und mittels eines Bilderkennungsalgorithmus (Bilddetektionsalgorithmus) ausgewertet werden. Dieser kann beispielsweise auf Kl-Methoden beruhen und vorab an verschiedenen Gütern trainiert worden sein.

Durch die Kombination des Gewichtes mit dem verfügbaren Volumen kann einfach beurteilt werden, ob zusätzliche Belastungen oder Transportaufträge akzeptiert werden können. Ein Transporter mit freiem Gewicht hat möglicherweise kein verfügbares Volumen und vice versa.

Durch die Aufnahme und Auswertung des manuellen Bildes beispielsweise durch den Fahrer kann auf eine kostenintensive Installation von Sensorik in dem Laderaum zur Ermittlung des freien Volumens verzichtet werden.

Die Erfindung kann für sämtliche Transportfahrzeuge eingesetzt werden, wie zum Beispiel LKWs, aber auch Kleintransporter und dergleichen.

Mithilfe der Erfindung ist es möglich, den zur Verfügung stehenden freien Laderaum optimal auszunützen, da dieser noch während der gerade abgefahrenen Route neu zugeteilt werden kann und Aufträge mit neuen Gütern angenommen werden können.

Dadurch reduzieren sich die Kosten pro einzelnen transportierten Güter als auch die CO2 Bilanz der einzelnen transportierten Güter.

In bevorzugter Ausgestaltung wird das manuelle Bild von außerhalb des Transporters erzeugt. Dies kann beispielsweise mit einer Kamera in einer mobilen Einheit beispielsweise einem Tablet oder einem Handy erzeugt werden. Dabei bedeutet von Außerhalb, dass sich die Kamera außerhalb des Transporters befindet.

Vorzugsweise werden der Wert des Gewichtes und des Ladevolumens an ein Transportmanagementsystem übermittelt. Dadurch kann beispielsweise die ursprüngliche Route abgeändert werden, damit geeignete zusätzliche Güter aufgenommen werden können.

Weiterhin vorzugsweise generiert der Transporter und/ oder der Fahrer Informationen über den Status des Transporters, welche an ein Transportmanagementsystem übermittelt werden. Dies können beispielsweise vom Fahrer erzeugte Daten sein oder von einem Fahrerassistenzsystem erzeugte Daten wie beispielsweise Daten über Staus, neue Ankunftszeiten etc.

Vorzugsweise wird das Bild mittels eines Aufnahmegerätes, insbesondere eines Bildsensors erzeugt. Insbesondere ist das Bild ein Foto, welches durch eine Kamera in einer mobilen Einheit erzeugt wird.

Weiterhin vorzugsweise wird der freie Laderaum anhand eines auf das Bild angewendeten Bildverarbeitungsalgorithmus ermittelt. Dies kann beispielsweise ein KI (Künstliche Intelligenz) Verfahren sein, welches vorab trainiert worden ist.

Die Aufgabe wird weiter gelöst durch ein Transportmanagementsystem zur Steuerung zumindest eines Transporters unter Verwendung eines wie oben beschriebenen Verfahrens.

Durch ein solches Transportmanagementsystem können Transporter zusätzliche Ladung während einer Fahrt aufnehmen. Durch die Erfindung kann auf beispielsweise eine bilaterale Kommunikation mit den einzelnen Fahrern der Transporter verzichtet werden. Mögliche Leerfahrten können somit durch falsche oder unzureichende Informationen verhindert werden.

Durch die Erfindung verfügt das Transportmanagementsystem ständig über die aktuellen Informationen über Gewicht und Ladungsvolumen.

Die zusätzliche Ladekapazität, bestehend aus Volumen und Gewicht, kann beispielsweise auf Frachtenbörsen bereitgestellt werden.

Durch die Erfindung ist eine einfache Annahme beispielsweise weiterer Aufträge möglich, so dass eine verbesserte Auslastung des Ladevolumens bewerkstelligt werden kann.

Der Prozess des Abgleichs von zusätzlichen Ladungen mit der verfügbaren Kapazität kann stark vereinfacht werden. Dies ermöglicht es, den Transport als Dienstleistung anzubieten.

Durch die Erfindung kann somit Zeit eingespart und die Auslastung des Laderaums maximiert werden. Durch die Aufnahme zusätzlicher Güter kann zudem die CO2-Emission pro Güter reduziert werden.

Vorzugsweise erfolgt die Steuerung unter Verwendung von Informationen aus der Gruppe Orts- und Zeitangaben zur Herstellung und/oder Klassifizierung zu den Gütern.

Weiterhin vorzugsweise erfolgt die Steuerung unter Verwendung von Informationen über spezielle Bedingungen der Güter, wobei spezielle Bedingungen Informationen aus der Gruppe Abfall und/oder Gefahrgut und/oder Frischware umfassen.

Somit können die geladenen und ggf. neu zu ladenden Güter besser aufeinander abgestimmt werden.

In weiterer bevorzugter Ausgestaltung ist das Transportmanagementsystem dazu ausgebildet, Informationen über zur Verfügung stehenden Laderaum an ein Logistiksystem zu übermitteln. Dabei ist das Logistiksystem beispielsweise eine Frachtenbörse oder ein anderes Transportmanagementsystem.

Dadurch kann das Transportmanagementsystem bzw der Betreiber des Transportmanagementsystem seine Realauslastung optimieren, indem er bei den freiem Laderaum auf einer solchen Frachtenbörse zur Verfügung stellt und

Ein Logistiksystem bzw. solche Frachtenbörse kann auf einer Plattform ausgebildet sein. Auf der Frachtenbörse werden Frachtaufträge, gegebenenfalls unter Veröffentlichung, angeboten. Weiterhin ist das Transportmanagementsystem dazu ausgebildet, Informationen über zur Verfügung stehenden Laderaum an die Frachtenbörse zu übermitteln. Diese können dann von einem Versender abgerufen werden.

Auch können Versender ihre zu versendenden Güter auf der Frachtenbörse anbieten. Hier können beispielsweise Anzahl, Größe und Gewicht der Güter, Gefahrgutklassen, Frachttermine angegeben werden.

Vorzugsweise ist das Transportmanagementsystem dazu ausgebildet, zusätzliche Informationen über Bestimmungsort und/oder Bestimmungsland und/oder Informationen über die geladenen Güter und /oder die Tourenplanung der geladenen Güter auf dem Logistiksystem zur Verfügung zu stellen. Dabei ist das Logistiksystem beispielsweise eine Frachtenbörse oder andere Transportmanagementsystem.

In weiterer bevorzugter Ausgestaltung ist das Transportmanagementsystem dazu ausgelegt, anhand des ermittelten Gewichtes der geladenen Güter und des ermittelten Beladungszustandes eine Routenplanung dynamisch anzupassen, wenn während des Abfahrens der Route neue Aufträge angenommen und/oder eine Änderung von bestehenden Aufträgen erfolgt.

Weitere Eigenschaften und Vorteile der vorliegenden Erfindung ergeben sich aus der nachfolgenden Beschreibung unter Bezugnahme auf die beiliegenden Figuren. Darin zeigen schematisch:
FIG 1: eine Aufnahme eines Ladungsraums mittels einer Kamera gemäß der Erfindung,
FIG 2: ein Transporter gemäß der Erfindung,
FIG 3: ein Transportmanagementsystem gemäß der Erfindung.

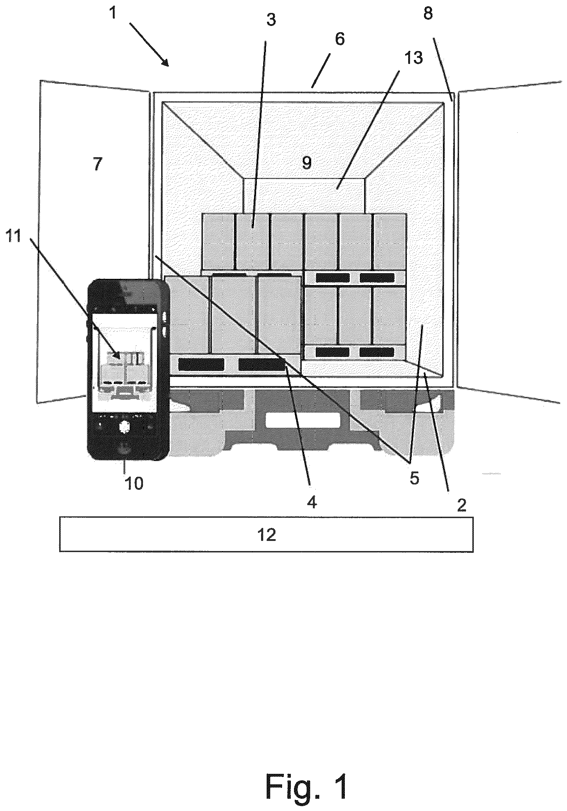

FIG 1 zeigt einen Transporter 1 mit einer Ladefläche 2 auf der Güter 3 geladen sind. Der Transporter 1 weist Seitenwände 5, eine Vorderwand 13 und ein Dach 6 auf. Der Transporter 1 ist hier zur heckseitigen Beladung ausgebildet, indem eine Rückwand aus einer Tür 7 mit einem Türrahmen 8 zur Beladung der Ladefläche 2 mit Gütern 3 ausgebildet ist. Die Seitenwand 5, das Dach 6 und die Türe 7 sowie die Ladefläche 2 bilden den Laderaum 9 aus.

Vorzugsweise ist der Türrahmen 8 rechtwinkelig und der Laderaum 9 quaderförmig ausgebildet.

Die Güter 3 können beispielsweise zum Transport auf Paletten 4 im Laderaum 9 auf der Ladefläche 2 geladen sein.

Zur Erkennung des freien Laderaums 9 wird zunächst ein Bild 11, vorzugsweise ein Foto von dem beladenen Transporter 1, das heißt von den Gütern 3 auf der Ladefläche 2, mittels einer Kamera getätigt. Vorzugsweise ist diese Kamera in einer mobilen Einheit, wie beispielsweise in einem Tablet oder einem Handy 10 angeordnet. Dabei weist das Tablet oder das Handy 10 eine inertiale Messeinheit (IMU), welche mit der Kamera verbunden ist, oder die Kamera selber eine inertiale Messeinheit (IMU) auf.

Eine solche inertiale Messeinheit weist Beschleunigungs- und Drehratensensoren mit denen Lageänderungen berechnet werden, auf. Dadurch kann ein optimiertes Bild 11 erstellt werden.

Die Kamera nimmt den Laderaum 9 mit den Gütern 3 auf, in dem beispielsweise ein Fahrer die Kamera manuell bedient. Somit wird das Bild 11 manuell erstellt. Vorzugsweise wird die Aufnahme des Bildes 11 von dem Fahrer von außerhalb des Transporters 1 getätigt. Das manuell aufgenommene Bild kann bspw. durch den Fahrer mittels dem Handy 10 erstellt werden.

Anschließend wird ein Bilderkennungsalgorithmus auf das Bild 11 zur Erkennung des belegten und unbelegten Laderaumvolumens angewandt. Dieser Bilderkennungsalgorithmus kann ein KI-Algorithmus sein, welcher vorher unter Verwendung verschiedener Güter 3 trainiert wurde. Dieser Kl- Algorithmus kann beispielsweise als ein künstliches neuronales Netz ausgestaltet sein oder beispielsweise ein anderer selbstlernender Algorithmus sein. Durch künstliche Intelligenz trainierte Algorithmen können in Bruchteilen einer Sekunde ein passendes Ergebnis liefern, so dass hierdurch eine schnelle Auswertung des Bildes 11 möglich ist.

Durch den Bilderkennungsalgorithmus kann somit das freie Laderaumvolumen erkannt werden.

Ferner wird das Gewicht der geladenen Güter 3 bestimmt und daraus das Gewicht berechnet, welches noch geladen werden kann. Das Gewicht kann beispielsweise durch ein Reifendruckkontrollsystem 12 (TPMS), durch Dehnungsmessstreifen oder durch eine Kontrolle der Luftfedern etc. festgestellt werden.

Durch die Kombination des Gewichtes mit dem verfügbaren Ladevolumen kann einfach beurteilt werden, ob zusätzliche Belastungen akzeptiert werden können. Somit kann verhindert werden, dass ein Transporter 1 mit freiem Gewicht kein verfügbares Volumen mehr hat und umgekehrt, und dies nicht erkannt wird.

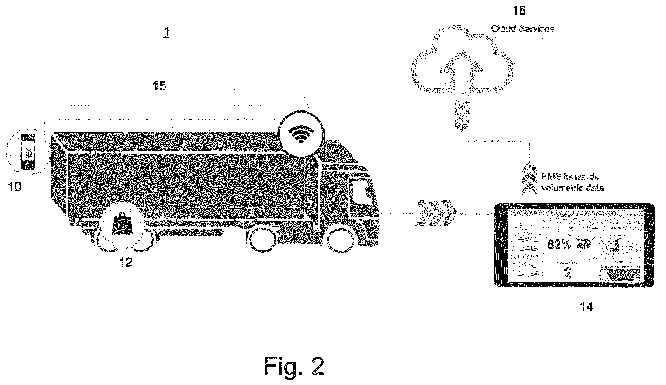

Das freie Ladevolumen und das Gewicht können durch eine Transportertelematikeinheit 15 (FIG 2) an ein Transportmanagementsystem 14 (FIG 2) übermittelt werden.

FIG 2 zeigt ein Transportmanagementsystem 14 eines Transporters 1.

Alternativ kann der Wert des berechneten Gewichts und der Wert des berechneten freien Laderaumvolumens durch das Handy 10 an das Transportmanagementsystem 14 übermittelt werden. Auch kann dieses dem Fahrer zusätzlich im Transporter 1 angezeigt werden.

Ferner übermittelt das Transportmanagementsystem 14 vorzugsweise die Informationen über zur Verfügung stehenden Laderaum und das Gewicht an eine Logistiksystem. Dies ist vor allem eine Frachtenbörse 16. Diese kann auf einer Plattform ausgebildet sein. Auf der Frachtenbörse 16 werden Frachtaufträge, gegebenenfalls unter Veröffentlichung, angeboten. Diese können dann von einem Versender abgerufen werden.

Auch können Versender ihre zu vergebenden Güter auf der Frachtenbörse anbieten. Anzugeben sind beispielsweise Anzahl, Größe und Gewicht der Frachtstücke, Gefahrgutklassen, Frachttermine etc.

Ferner werden vom Transportmanagementsystem 14 zusätzliche Informationen über Bestimmungsort und/oder Bestimmungsland und/oder Informationen über die geladenen Güter 3 und /oder die Tourenplanung der geladenen Güter auf der Frachtenbörse 16 zur Verfügung gestellt.

Ferner kann das Transportmanagementsystem 14 Aufträge unter Verwendung von Informationen aus der Gruppe Orts- und Zeitangaben zur Herstellung und/oder Klassifizierung zu den Gütern annehmen oder ablehnen oder diese Informationen auf der Frachtenbörse 16 zur Verfügung stellen.

Ferner kann das Transportmanagementsystem 14 Aufträge unter Verwendung weiterer Informationen über spezielle Bedingungen wie Informationen aus der Gruppe Abfall und/oder Gefahrgut und/oder Frischware annehmen oder ablehnen oder diese Informationen auf der Frachtenbörse 16 zur Verfügung stellen.

Werden während des Abfahrens der Route neue Aufträge angenommen, beispielsweise in dem auf der Frachtenbörse 16 von einem Versender freie Ladefläche 2 gekauft wird, so erfolgt eine Änderung von bestehenden Aufträgen. In diesem Fall ist das Transportmanagementsystem 14 dazu ausgelegt, anhand des angenommenen Auftrags eine Routenplanung dynamisch anzupassen.

Durch die zusätzliche Information über freie Ladefläche 2 in Kombination mit dem Gewicht kann ein effizientes Logistikmanagement durchgeführt werden. Die Ermittlung von ungenutzter Ladefläche 2 kann zur Optimierung grundlegender Logistikmanagementaufgaben, An- und Ablehnung von Aufträgen und zur Optimierung der Lagerhaltung verwendet werden.

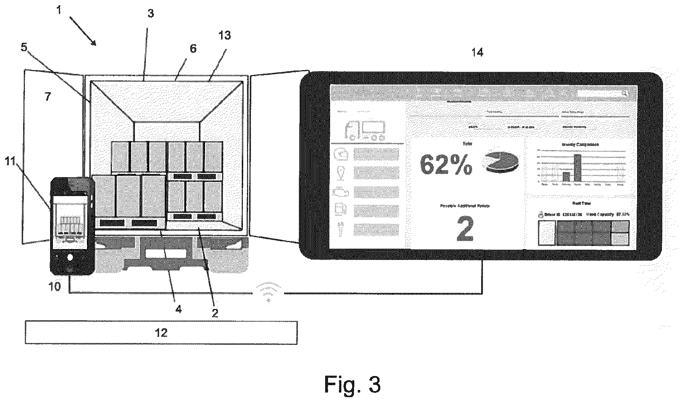

FIG 3 zeigt das Display eines solchen Transportmanagementsystems 14 im Detail. Durch die Erfindung kann eine Reduzierung der Leerfahrten für Transporter 1 (FIG 2) und die bessere Auslastung von Kapazitäten erzielt werden. Ferner werden weniger unnötige Fahrten und weniger CO2 pro transportiertem Gut notwendig. Gerade in Zeiten des steigenden Bewusstseins für den Klimawandel ist dies ein großer Vorteil.

Insbesondere kann diese Information ohne technische Zusatzausstattung wie Bildsensoren im Laderaum 9 (FIG 1) gewonnen werden. Es muss daher keine zusätzliche Hardware gekauft, installiert, geliefert oder gewartet werden.

Die Informationen über den Ladungszustand des Transporters 1 werden durch dieselben Bilder 11 gewonnen, die zum Nachweis der Einhaltung der Ladungssicherung aufgenommen werden. Dadurch müssen keine zusätzlichen Prozessschritte durchgeführt werden, was die Arbeitsabläufe für die Transporter -Fahrer vereinfacht und Zeit spart.

Zudem muss kein weiterer technischer Aufwand betrieben werden; es wird nur ein Bild 11 benötigt, um die Tiefe abzuschätzen und daraus die freie Ladefläche 2 zu berechnen. Dabei kann jede beliebige Kamera verwendet werden. Zudem muss die Kamera nicht kalibriert sein.

## Patentansprüche

1. Verfahren zur Ermittlung des Beladungszustandes eines mit Gütern (3) beladenen Transporters (1), wobei der Transporter (1) einen von einer Ladefläche (2), einer Vorderwand (13), einer Rückwand, mehreren Seitenwänden (5) sowie einem Dach (6) umgrenzten Laderaum (9) zur Aufnahme der Güter (3) aufweist, wobei zumindest die Vorderwand (13), und/oder die Rückwand und/oder eine Seitenwand (7) eine Türe (7) zum Beladen der Ladefläche (2) mit Gütern (3) aufweist,
umfassend der Schritte:
- Ermitteln des Gewichtes der geladenen Güter (3),
- Ermitteln des freien Ladevolumens in dem Laderaum (2) anhand der Auswertung zumindest eines manuell aufgenommenen Bildes (11) des mit Gütern (3) beladenen Laderaums (9).

2. Verfahren nach Anspruch 1, **dadurch gekennzeichnet, dass** das manuelle Bild (11) von außerhalb des Transporters (1) erzeugt wird.

3. Verfahren nach Anspruch 1 oder 2, **dadurch gekennzeichnet, dass** der Wert des Gewichtes und des Ladevolumens an ein Transportmanagementsystem (14) übermittelt werden.

4. Verfahren nach einem der vorhergehenden Ansprüche, **dadurch gekennzeichnet, dass**
der Transporter (1) und/oder der Fahrer Informationen über den Status des Transporters (1) generiert, welche an ein Transportmanagementsystem (14) übermittelt werden.

5. Verfahren nach einem der vorhergehenden Ansprüche, **dadurch gekennzeichnet, dass**
das manuelle Bild (11) mittels eines Aufnahmegerätes erzeugt wird.

6. Verfahren nach Anspruch 5, **dadurch gekennzeichnet, dass** das manuelle Bild (11) durch eine Kamera in einer mobilen Einheit erzeugt wird.

7. Verfahren nach einem der vorhergehenden Ansprüche, **dadurch gekennzeichnet, dass**
der freie Laderaum (9) anhand eines auf das Bild (11) angewendeten Bildverarbeitungsalgorithmus ermittelt wird.

8. Transportmanagementsystem (14) zur Steuerung zumindest eines Transporters (1) unter Verwendung des Verfahrens nach einem der vorangegangenen Ansprüche.

9. Transportmanagementsystem (14) nach Anspruch 8, **dadurch gekennzeichnet, dass** die Steuerung unter Verwendung von Informationen aus der Gruppe Orts- und Zeitangaben zur Herstellung und/oder Klassifizierung zu den Gütern (3) erfolgt.

10. Transportmanagementsystem (14) nach Anspruch 8 oder 9, **dadurch gekennzeichnet, dass**
die Steuerung unter Verwendung von Informationen über spezielle Bedingungen der Güter (3) erfolgt, wobei spezielle Bedingungen Informationen aus der Gruppe Abfall und/oder Gefahrgut und/oder Frischware umfassen.

11. Transportmanagementsystem (14) nach einem der vorhergehenden Ansprüche 8 bis 10, **dadurch gekennzeichnet, dass**
das Transportmanagementsystem (14) dazu ausgebildet ist, Informationen über zur Verfügung stehenden Laderaum (9) an ein Logistiksystem zu übermitteln.

12. Transportmanagementsystem (14) nach Anspruch 11, **dadurch gekennzeichnet, dass** das Transportmanagementsystem (14) dazu ausgebildet ist, Informationen über Bestimmungsort und/oder Bestimmungsland und/oder Informationen über die geladenen Güter (3) und /oder die Tourenplanung der geladenen Güter (3) auf dem ein Logistiksystem zur Verfügung zu stellen.

13. Transportmanagementsystem (14) nach einem der vorhergehenden Ansprüche 8 bis 12, **dadurch gekennzeichnet, dass**
das Transportmanagementsystem (14) dazu ausgelegt ist, anhand des ermittelten Gewichtes der geladenen Güter (3) und des ermittelten Beladungszustandes eine Routenplanung dynamisch anzupassen, wenn während des Abfahrens der Route neue Aufträge angenommen und/oder eine Änderung von bestehenden Aufträgen erfolgt.

## Claims

1. Method for determining the loading state of a transporter (1) loaded with goods (3), wherein the transporter (1) has a load space (9) bordered by a loading area (2), a front wall (13), a rear wall, a plurality of side walls (5) and a roof (6) for receiving the goods (3), wherein at least a front wall (13) and/or the rear wall and/or a side wall (7) has a door (7) for loading the loading area (2) with goods (3), comprising the steps:
- determining the weight of the loaded goods (3),
- determining the free loading volume in the load space (2) by using the evaluation of at least one manually recorded image (11) of the load space (9) loaded with goods (3).

2. Method according to Claim 1, **characterized in that**
the manual image (11) is produced from outside the transporter (1).

3. Method according to Claim 1 or 2, **characterized in that**
the value of the weight and of the loading volume are transmitted to a transport management system (14).

4. Method according to one of the preceding claims, **characterized in that** the transporter (1) and/or the driver generates information about the status of the transporter (1), which is transmitted to a transport management system (14).

5. Method according to one of the preceding claims, **characterized in that** the manual image (11) is produced by means of a recording device.

6. Method according to Claim 5, **characterized in that**
the manual image (11) is produced by a camera in a mobile unit.

7. Method according to one of the preceding claims, **characterized in that** the free loading space (9) is determined by using an image processing algorithm applied to the image (11).

8. Transport management system (14) for controlling at least one transporter (1) by using the method according to one of the preceding claims.

9. Transport management system (14) according to Claim 8, **characterized in that** the control is carried out by using information from the group of location and time information relating to the production and/or classification of the goods (3).

10. Transport management system (14) according to Claim 8 or 9, **characterized in that**
the control is carried out by using information about specific conditions of the goods (3), specific conditions comprising information from the group of waste and/or hazardous goods and/or fresh goods.

11. Transport management system (14) according to one of the preceding Claims 8 to 10, **characterized in that**
the transport management system (14) is designed to transmit information about available loading space (9) to a logistics system.

12. Transport management system (14) according to Claim 11, **characterized in that**
the transport management system (14) is designed to provide information about the destination and/or destination country and/or information about the loaded goods (3) and/or the route planning of the loaded goods (3) on the one logistics system.

13. Transport management system (14) according to one of the preceding Claims 8 to 12, **characterized in that**
the transport management system (14) is designed to adapt a route plan dynamically by using the determined weight of the loaded goods (3) and the determined state of loading if new orders are accepted and/or existing orders are changed while travelling over the route.

## Revendications

1. Procédé de détermination de l'état de chargement d'un transporteur (1) chargé de marchandises (3), le transporteur (1) comportant un espace de chargement (9) qui est délimité par une surface de chargement (2), une paroi avant (13), une paroi arrière, une pluralité de parois latérales (5) et un toit (6) et qui est destiné à recevoir les marchandises (3), au moins la paroi avant (13) et/ou la paroi arrière et/ou une paroi latérale (7) comportant une porte (7) destinée au chargement de la surface de chargement (2) avec des marchandises (3),
ledit procédé comprenant les étapes suivantes :
- déterminer le poids des marchandises chargées (3),
- déterminer le volume de chargement libre dans l'espace de chargement (2) sur la base de l'évaluation d'au moins une image (11), capturée manuellement, de l'espace de chargement (9) chargé de marchandises (3).

2. Procédé selon la revendication 1, **caractérisé en ce que** l'image manuelle (11) est générée depuis l'extérieur du transporteur (1).

3. Procédé selon la revendication 1 ou 2, **caractérisé en ce que** la valeur du poids et le volume de chargement sont transmis à un système de gestion de transport (14).

4. Procédé selon l'une des revendications précédentes, **caractérisé en ce que** le transporteur (1) et/ou le conducteur génèrent des informations sur l'état du transporteur (1) qui sont transmises à un système de gestion de transport (14).

5. Procédé selon l'une des revendications précédentes, **caractérisé en ce que** l'image manuelle (11) est générée au moyen d'un dispositif de capture.

6. Procédé selon la revendication 5, **caractérisé en ce que**
l'image manuelle (11) est générée par une caméra dans une unité mobile.

7. Procédé selon l'une des revendications précédentes, **caractérisé en ce que** l'espace de chargement libre (9) est déterminé à l'aide d'un algorithme de traitement d'image appliqué à l'image (11).

8. Système de gestion de transport (14) destiné à commander au moins un transporteur (1) à l'aide du procédé selon l'une des revendications précédentes.

9. Système de gestion de transport (14) selon la revendication 8, **caractérisé en ce que** la commande est effectuée à l'aide des informations provenant du groupe de données de lieu et de temps relatives à la production et/ou au classement des marchandises (3).

10. Système de gestion de transport (14) selon la revendication 8 ou 9, **caractérisé en ce que**
la commande est effectuée à l'aide d'informations sur les conditions particulières des marchandises (3), les conditions particulières comprenant des informations provenant du groupe de déchets et/ou de marchandises dangereuses et/ou de marchandises fraîches.

11. Système de gestion de transport (14) selon l'une des revendications précédentes 8 à 10, **caractérisé en ce que**
le système de gestion de transport (14) est conçu pour transmettre des informations sur l'espace de chargement disponible (9) à un système logistique.

12. Système de gestion de transport (14) selon la revendication 11, **caractérisé en ce que** le système de gestion de transport (14) est conçu pour mettre des informations sur le lieu de destination et/ou le pays de destination et/ou des informations sur les marchandises chargées (3) et/ou la planification des tournées des marchandises chargées (3) à disposition d'un système logistique.

13. Système de gestion de transport (14) selon l'une des revendications précédentes 8 à 12, **caractérisé en ce que**
le système de gestion de transport (14) est conçu pour adapter dynamiquement une planification d'itinéraire sur la base du poids déterminé des marchandises chargées (3) et de l'état de chargement déterminé si de nouvelles commandes sont acceptées et/ou si une modification de commandes existantes est effectuée le long de l'itinéraire.
